# EUROPEAN PATENT APPLICATION

(11) **EP 4 033 453 A1**
(43) Date of publication of application: **27.07.2022**
(21) Application number: 21203061.3
(22) Date of filing: 18.10.2021
(51) Int. Cl.: G06V 10/82

(54) **TRAINING METHOD AND APPARATUS FOR TARGET DETECTION MODEL, DEVICE AND STORAGE MEDIUM**

(30) Priority: 22.01.2021 CN 202110090473
(71) Applicant: Beijing Baidu Netcom Science and Technology Co., Ltd., Beijing 100085 (CN)
(72) Inventor: XIN, Ying, BEIJING, 100085 (CN); FENG, Yuan, BEIJING, 100085 (CN); WANG, Guanzhong, BEIJING, 100085 (CN); YUAN, Pengcheng, BEIJING, 100085 (CN); ZHANG, Bin, BEIJING, 100085 (CN); WANG, Xiaodi, BEIJING, 100085 (CN); LONG, Xiang, BEIJING, 100085 (CN); PENG, Yan, BEIJING, 100085 (CN); ZHENG, Honghui, BEIJING, 100085 (CN); HAN, Shumin, BEIJING, 100085 (CN)
(74) Representative: Chimini, Francesco

(57) **Abstract**

Provided are a training method and apparatus for a target detection model, a device and a storage medium. The training method is described below. A feature map of a sample image is processed through a classification network of an initial model and a heat map and a classification prediction result of the feature map are obtained, a classification loss value is determined according to the classification prediction result and classification supervision data of the sample image, and a category probability of pixels in the feature map is determined according to the heat map of the feature map and a probability distribution map of the feature map is obtained; the feature map is processed through a regression network of the initial model and a regression prediction result is obtained, and a regression loss value is determined.

## Description

### TECHNICAL FIELD

The present disclosure relates to the technical field of computers and, in particular, to artificial intelligence technologies such as deep learning and computer vision.

### BACKGROUND

With the development of artificial intelligence, target detection has been widely applied in many fields such as autonomous driving, medicine and new retail. Target detection refers to accurately finding the location of a target in an image and determining the category of the target. Since various objects have different appearances, shapes and postures, the process of imaging will be interfered with by factors such as illumination and occlusion. Related target detection models have low accuracy and need to be improved urgently.

### SUMMARY

The present disclosure provides a training method and apparatus for a target detection model, a device and a storage medium.

According to an aspect of the present disclosure, a training method for a target detection model is provided. The method includes steps described below.

A feature map of a sample image is processed through a classification network of an initial model and a heat map and a classification prediction result of the feature map are obtained, a classification loss value is determined according to the classification prediction result and classification supervision data of the sample image, and a category probability of pixels in the feature map is determined according to the heat map of the feature map and a probability distribution map of the feature map is obtained.

The feature map is processed through a regression network of the initial model and a regression prediction result is obtained, and a regression loss value is determined according to the probability distribution map, the regression prediction result and regression supervision data of the sample image.

The initial model is trained according to the regression loss value and the classification loss value, and the target detection model is obtained.

According to another aspect of the present disclosure, a training apparatus for a target detection model is provided. The apparatus includes a classification processing module, a regression processing module and a model training module.

The classification processing module is configured to process, through a classification network of an initial model, a feature map of a sample image and obtain a heat map and a classification prediction result of the feature map, determine a classification loss value according to the classification prediction result and classification supervision data of the sample image, and determine, according to the heat map of the feature map, a category probability of pixels in the feature map and obtain a probability distribution map of the feature map.

The regression processing module is configured to process, through a regression network of the initial model, the feature map and obtain a regression prediction result, and determine a regression loss value according to the probability distribution map, the regression prediction result and regression supervision data of the sample image.

The model training module is configured to train the initial model according to the regression loss value and the classification loss value, and obtain the target detection model.

According to another aspect of the present disclosure, an electronic device is provided. The electronic device includes at least one processor and a memory.

The memory is communicatively connected to the at least one processor.

The memory stores instructions executable by the at least one processor. The instructions are executed by the at least one processor to cause the at least one processor to execute the training method for a target detection model of any one of embodiments of the present disclosure.

According to another aspect of the present disclosure, a non-transitory computer-readable storage medium is provided. The storage medium stores computer instructions for causing a computer to execute the training method for a target detection model of any one of the embodiments of the present disclosure.

According to another aspect of the present disclosure, a computer program product is provided. The computer program product includes a computer program which, when executed by a processor, implements the training method for a target detection model of any one of the embodiments of the present disclosure.

According to the technology of the present disclosure, a training method that may improve the accuracy of a target detection model is provided.

It is to be understood that the content described in this part is neither intended to identify key or important features of the embodiments of the present disclosure nor intended to limit the scope of the present disclosure. Other features of the present disclosure are apparent from the description provided hereinafter.

### BRIEF DESCRIPTION OF DRAWINGS

The drawings are intended to provide a better understanding of the present solution and not to limit the present disclosure.
FIG. 1A is a flowchart of a training method for a target detection model according to an embodiment of the present disclosure;
FIG. 1B is a structural diagram of an initial model according to an embodiment of the present disclosure;
FIG. 2A is a flowchart of another training method for a target detection model according to an embodiment of the present disclosure;
FIG. 3A is a flowchart of another training method for a target detection model according to an embodiment of the present disclosure;
FIG. 3B is a structural diagram of another initial model according to an embodiment of the present disclosure;
FIG. 4 is a structural diagram of a training apparatus for a target detection model according to an embodiment of the present disclosure; and
FIG. 5 is a block diagram of an electronic device for implementing a training method for a target detection model according to an embodiment of the present disclosure.

### DETAILED DESCRIPTION

Example embodiments of the present disclosure, including details of embodiments of the present disclosure, are described hereinafter in conjunction with the drawings to facilitate understanding. The example embodiments are illustrative only. Therefore, it is to be understood by those of ordinary skill in the art that various changes and modifications may be made to the embodiments described herein without departing from the scope and spirit of the present disclosure. Similarly, description of well-known functions and constructions is omitted hereinafter for clarity and conciseness.

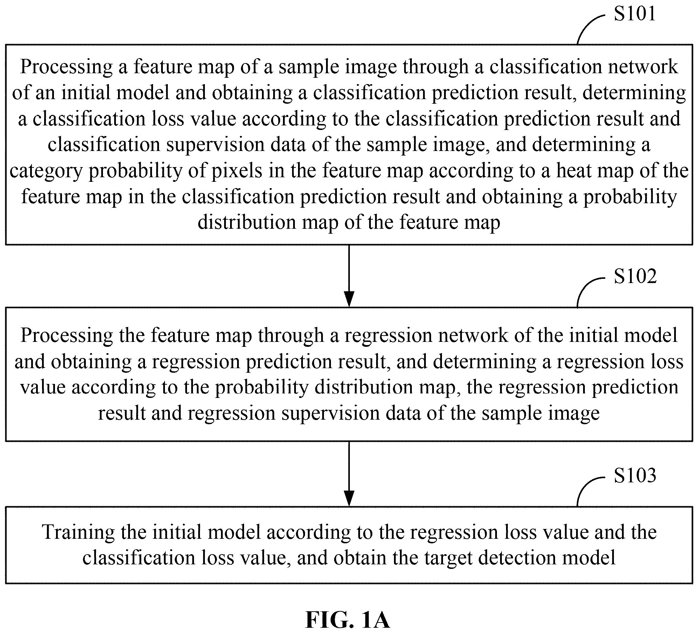

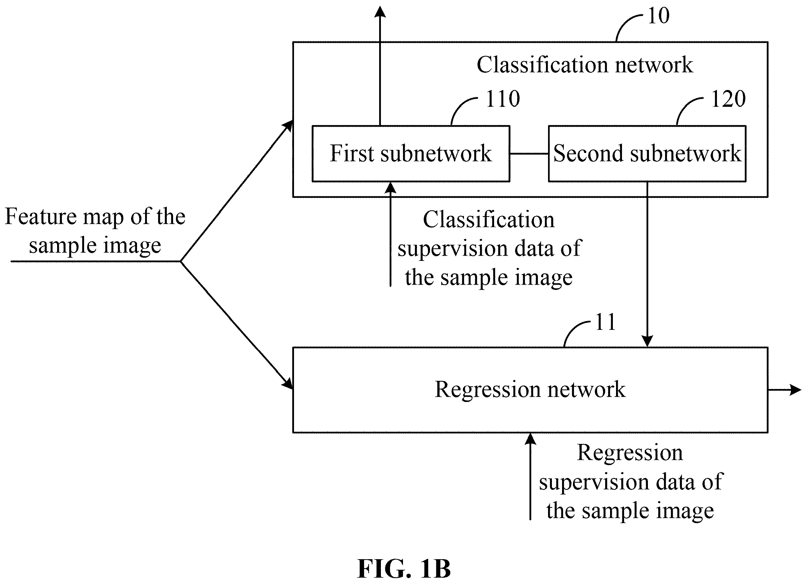

FIG. 1A is a flowchart of a training method for a target detection model according to an embodiment of the present disclosure, and FIG. 1B is a structural diagram of an initial model according to an embodiment of the present disclosure. The embodiment of the present disclosure is applicable to constructing a target detection model that may accurately find the location of a target in an image and determine the category of the target. Optionally, the target in the embodiment includes but is not limited to people, objects, animals, plants, etc. The embodiment may be executed by a training apparatus for a target detection model. The apparatus may be implemented by software and/or hardware and may be integrated in an electronic device, for example, integrated in a mobile terminal or a server. As shown in FIG. 1A and FIG. 1B, the training method for a target detection model includes steps described below.

In step S101, a feature map of a sample image is processed through a classification network of an initial model and a classification prediction result is obtained, a classification loss value is determined according to the classification prediction result and classification supervision data of the sample image, and a category probability of pixels in the feature map is determined according to a heat map of the feature map in the classification prediction result and a probability distribution map of the feature map is obtained.

In the embodiment, the so-called initial model may be a target detection model that has been constructed but not trained and is used for accurately finding the location of a target in an image and determining the category of the target. Optionally, as shown in FIG. 1B, the initial model 1 may at least include the classification network 10 and a regression network 11. The classification network 10 and the regression network 11 are parallel, and the input of the classification network 10 and the input of the regression network 11 are both the feature map of the sample image. Specifically, the input of the initial model 1 is the first input of the classification network 10 and the first input of the regression network 11, the output of the classification network 10 is connected to the second input of the regression network 11, and the output of the classification network 10 and the output of the regression network 11 are the output of the initial model 1. Preferably, the classification network 10 may include a first subnetwork 110 and a second subnetwork 120, the output of the first subnetwork 110 is connected to the input of the second subnetwork 120, the output of the second subnetwork 120 is connected to the second input of the regression network 11, and the output of the first subnetwork 110 and the output of the regression network 11 are the output of the initial model 1.

Optionally, in the embodiment, the classification network 10 may include multiple convolutional layers, which are mainly used for target classification. Specifically, the first subnetwork 110 in the classification network 10 is used for determining whether an input image (that is, the feature map of the sample image) has a target and outputting the category of the corresponding target, and the second subnetwork 120 in the classification network 10 is used for determining the probability of each pixel in the feature map belonging to the target.

Optionally, sample data required for training the initial model in the embodiment of the present disclosure includes: the feature map of the sample image, the classification supervision data and regression supervision data of the sample image. The sample image may be an image including a target used in model training, such as a human face image; feature extraction is performed on the sample image and thus the feature map of the sample image is generated. The classification supervision data of the sample image may include data for marking the category of the target of the sample image or of the feature map of the sample image. The regression supervision data of the sample image may include data for marking the location of the target of the sample image or of the feature map of the sample image.

In the embodiment, the heat map of the feature map may also be referred to a heat map of the sample image. The heat map is essentially an intermediate product of the first subnetwork 110. Specifically, in the heap map, each part of the image (such as the feature map) may use colors representing heat to show the probability that the target is located in each region of the image. Optionally, the colors representing heat may be the default or may be defined by the user. For example, the colors corresponding to heat from high probability to low probability are: red, orange, yellow, green, and blue.

The classification prediction result may include the data of the classification network predicting the category of the target of the sample image. Specifically, the heat map may be multiplied by elliptical Gaussian kernel to obtain a center point of the heat map and determine the category of the center point, which is the classification prediction result. Further, if the feature map includes multiple targets, the classification prediction result may include the category of each target. A so-called loss value is used for characterizing the proximity between an actual output result and an expected output result. Optionally, the smaller the loss value, the closer the actual output result to the expected output result. In the embodiment, the classification loss value is the proximity between the classification prediction result and the classification supervision data.

Optionally, in the embodiment of the present disclosure, the feature map of the sample image may be configured as the first input of the classification network 10 of the initial model 1 and is input into the classification network 10, then the input feature map of the sample image is processed through the classification network 10, and the heat map and the classification prediction result of the feature map are obtained. The classification supervision data of the sample image is configured as the second input of the classification network 10 and is input into the classification network 10, and the classification loss value is determined through the classification network 10 according to the classification prediction result and the classification supervision data. Meanwhile, the classification network 10 further determines the category probability of each pixel in the feature map (that is, the probability that each pixel belongs to the category the target belonging to) according to the heat map of the feature map, and then a probability distribution map of the feature map is obtained. Specifically, the feature map of the sample image is processed through the first subnetwork 110 in the classification network 10, so that the heap map and the classification prediction result of the feature map are obtained, and the classification loss value is determined according to the classification prediction result and the classification supervision data; the second subnetwork 120 in the classification network 10 processes the heat map of the feature map, so that the category probability of pixels in the feature map is determined, and then the probability distribution map of the feature map is obtained. The probability distribution map is the distribution map of the category probability corresponding to each pixel in the feature map.

Preferably, in the embodiment, dimensionality reduction processing and activation processing may be performed on the heat map of the feature map through the second subnetwork 120 in the classification network 10, so that the category probability of the pixels in the feature map is obtained, and then the probability distribution map of the feature map is obtained.

Optionally, the heat map may include the number of categories, that is, the number of channels input into the second subnetwork 120, such as 80. Specifically, for the heat map of the feature map, the maximum value of channel dimensions is taken through the second subnetwork 120 in the classification network 10, and softmax function is calculated, so that the category probability of the pixels in the feature map is obtained, and then the probability distribution map of the feature map is obtained. In this way, an optional manner for obtaining the probability distribution map of the feature map is provided.

In step S102, the feature map is processed through a regression network of the initial model and a regression prediction result is obtained, and a regression loss value is determined according to the probability distribution map, the regression prediction result and regression supervision data of the sample image.

Optionally, in the embodiment, the regression network 11 may further include multiple convolutional layers, which are mainly used for target positioning. Specifically, the regression network 11 is used for determining the location of the target in the input image (that is, the feature map of the sample image) and output the location. That is to say, the output of the regression network 11 (that is, the regression prediction result) includes data for predicting the location of the target of the feature map of the sample image. For example, an image marked with a rectangular frame can be output. Optionally, in the image, coordinates of the rectangular frame may further be marked, or the distance from the center of the target to four sides of the rectangular frame may be output.

Optionally, in the embodiment of the present disclosure, the feature map of the sample image may be configured as the first input of the regression network 11 of the initial model 1, the probability distribution map output by the second subnetwork 120 of the classification network 10 may be configured as the second input of the regression network 11, and the regression supervision data of the sample image may be configured as the third input of the regression network 11; regression processing is performed on the first input through the regression network 11 and the regression prediction result is obtained, and the regression loss value is calculated by adopting a preset regression loss function according to the regression prediction result, the second input and the third input. For example, the regression prediction result can be multiplied by elliptical Gaussian kernel through the regression network 11 to generate a sampling region, the regression prediction result and the third input in the sampling region are processed, the second input is configured as a weight value to weight the result obtained by processing, and then the regression loss value is obtained.

In step S 103, the initial model is trained according to the regression loss value and the classification loss value, and the target detection model is obtained.

Optionally, in the embodiment, the regression loss value and the classification loss value can be added to obtain a total loss value; then the initial model 1 is trained by using the total loss value, network parameters of the classification network 10 and the regression network 11 in the initial model 1 are consecutively optimized until the model converges, and thus the target detection model is obtained. The evaluation using average parameters sometimes produces significantly better results than final training values, so that further, in the process of model training, an exponential moving average (EMA) of training the network parameters is maintained.

It should be noted that the related training process of the classification network and the related training process of the regression network are independent of each other, so that pixels with better feature expression has relatively small contribution to the regression loss, and thus the accuracy of the target detection model is relatively low. In the present disclosure, the probability distribution map determined according to the classification network is applied to the regression network, that is to say, the regression network and the classification network have information interaction, so that dual priority scheduling are achieved, and thereby the accuracy of the target detection model is improved. In addition, various objects have different appearances, shapes and postures, and imaging will be interfered by factors such as illumination and occlusion; however, compared with related target detection models, in the embodiment, the calculation manner of the regression loss value is introduced, so that the accuracy of the target detection model is improved. Moreover, it is worth noting that the target detection model of the embodiment does not use multiple predefined anchors like faster R-CNN, which reduces the memory of the model and thereby improves the speed of the model.

In the technical solution of the embodiment of the present disclosure, an initial model including a classification network and a regression network is constructed, a feature map of a sample image is input into the classification network and the regression network of the initial model respectively, classification supervision data is input into the classification network, regression supervision data is input into the regression network, and a classification loss value and a probability distribution map are obtained through the classification network according to the feature map and the classification supervision data of the sample image. Meanwhile, a regression loss value is obtained through the regression network according to the feature map of the sample image, the regression supervision data and the probability distribution map; and then the initial model is trained by adopting the regression loss value and the classification loss value, and thus the target detection model is obtained. In the present disclosure, in the process of model training, the probability distribution map determined through the classification network is applied to the regression network, that is to say, the effect of the classification network is reflected in the regression network, so that the balance between the regression network and the classification network is achieved, and the accuracy of the target detection model is improved. In addition, various objects have different appearances, shapes and postures, and imaging will be interfered by factors such as illumination and occlusion. However, compared with related target detection models, in the embodiment, the calculation manner of the regression loss value is introduced, so that the accuracy of the target detection model is improved.

Optionally, the trained target detection model in the embodiment of the present disclosure can be applied to a server or a mobile terminal to generate a classification prediction result and a regression prediction result of a target image according to an input feature map of the target image including a to-be-detected object. That is, a feature map of a target image is input into the target detection model, and a classification prediction result and a regression prediction result of the target image are obtained.

Specifically, if FIG. 1B shows a trained target detection model and a user wants to know the location and category of the to-be-detected object in the target image, the feature map of the target image including the to-be-detected object can be input into the target detection model, classification processing is performed on the feature map of the target image through the first subnetwork 110 in the classification network 10 in the target detection model, and the classification prediction result of the target image is obtained. Meanwhile, regression processing is performed on the feature map of the target image through the regression network 11 in the target detection model, and the regression prediction result of the target image is obtained. It should be noted that in the embodiment of the present disclosure, during the training of the target detection model, the first subnetwork 110, the second subnetwork 120 and the regression network 11 are all need to be trained to consecutively optimize network parameters; however, in practical applications, the location of the to-be-detected object in the target image can also be accurately found and the category of the to-be-detected object can be determined by only using the regression network and the first subnetwork in the classification network without the need of performing the process of obtaining the probability distribution map of the feature map, which provides a new idea for the development of target detection technologies in computer vision.

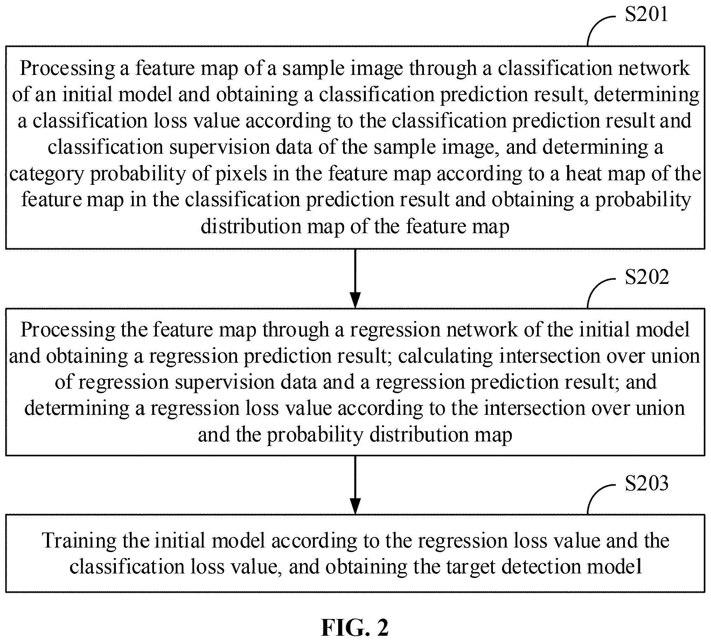

FIG. 2A is a flowchart of another training method for a target detection model according to an embodiment of the present disclosure. The embodiment provides a detailed description of how to determine the regression loss value on the basis of the preceding embodiment. As shown in FIG. 2, the training method for a target detection model includes steps described below.

In step S201, a feature map of a sample image is processed through a classification network of an initial model and a classification prediction result is obtained, a classification loss value is determined according to the classification prediction result and classification supervision data of the sample image, and a category probability of pixels in the feature map is determined according to a heat map of the feature map in the classification prediction result and a probability distribution map of the feature map is obtained.

In step S202, the feature map is processed through a regression network of the initial model and a regression prediction result is obtained; intersection over union of regression supervision data and a regression prediction result is calculated; and a regression loss value is determined according to the intersection over union and the probability distribution map.

Optionally, the regression supervision data is analyzed through the regression network, and target elliptical Gaussian kernel is determined. Then, the regression prediction result is multiplied by the target elliptical Gaussian kernel to generate a sampling region. For each rectangular frame in the sampling region, a frame in the regression supervision data corresponding to the rectangular frame is determined, intersection over union of the two frames is calculated, and meanwhile the pixel at the location in the probability distribution map corresponding to the rectangular frame is configured as a weight and is multiplied by the calculated intersection over union; then an average value of multiplication results associated with all rectangular frames in the sampling region is calculated, and the average value is subtracted from 1 to obtain the regression loss value.

Optionally, in the embodiment, the regression prediction result may be obtained by the following processes: regression processing is performed on the feature map through the regression network to obtain a sub-prediction result of each pixel in the feature map, and sub-prediction results of all pixels are comprehensively processed to obtain the regression prediction result. The sub-prediction result may be a rectangular frame of the location where the target marked by each pixel is located, and further, the sub-prediction result is an intermediate product of the regression network.

Further, in order to ensure the accuracy of the determined regression loss value, for the sub-prediction result of each pixel in the sampling region, the frame in the regression supervision data corresponding to the each pixel is determined, intersection over union of the two frames is calculated, and meanwhile the pixel at the location in the probability distribution map corresponding to the each pixel is configured as a weight and is multiplied by the calculated intersection over union; then an average value of multiplication results associated with all pixels in the sampling region is calculated, and the average value is subtracted from 1 to obtain the regression loss value.

It should be noted that in the related network, weights of sub-prediction results of different pixels in the sampling region are related to Gaussian sampling values. For the pixel with a large Gaussian response, the sub-prediction result of the pixel has greater contribution to the regression loss. In this process, the training process of the classification network and the training process of the regression network are independent of each other, so that for pixels with better feature expression, sub-prediction results of the pixels has relatively small contribution to the regression loss. In the embodiment, the probability distribution map determined according to the classification network is applied to the regression network, that is to say, according to the visual saliency of the classification process, the effect of the classification network is reflected in the regression network, so that the contribution of different adopted pixels in the region to the regression loss value is balanced, dual priority scheduling of the classification network and the regression network are achieved, and thereby the target detection model has a relatively high accuracy.

In step S203, the initial model is trained according to the regression loss value and the classification loss value, and the target detection model is obtained.

In the technical solution of the embodiment of the present disclosure, the intersection over union of the regression supervision data and the regression prediction result is determined, and the regression loss value is determined according to the intersection over union and the probability distribution map, which provides a new idea for the determination of the regression loss value, improves the accuracy of the regression loss value, and lays a foundation for improving the prediction accuracy of the target detection model.

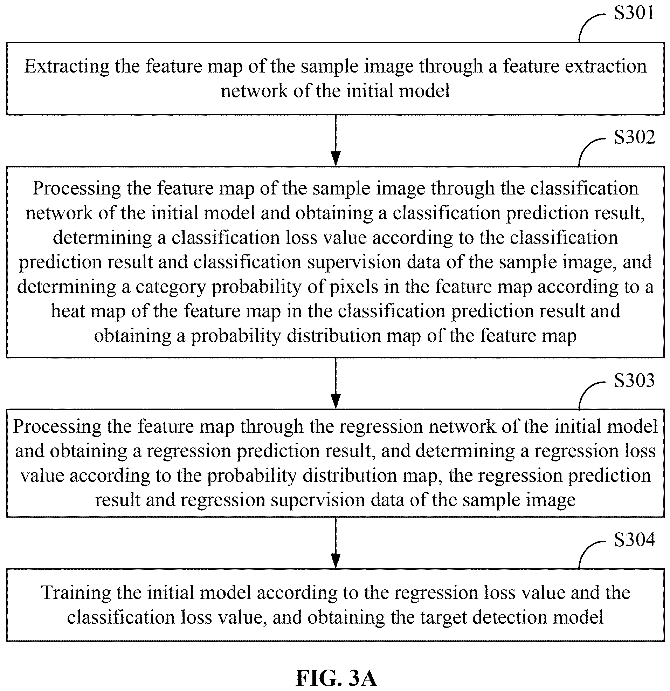

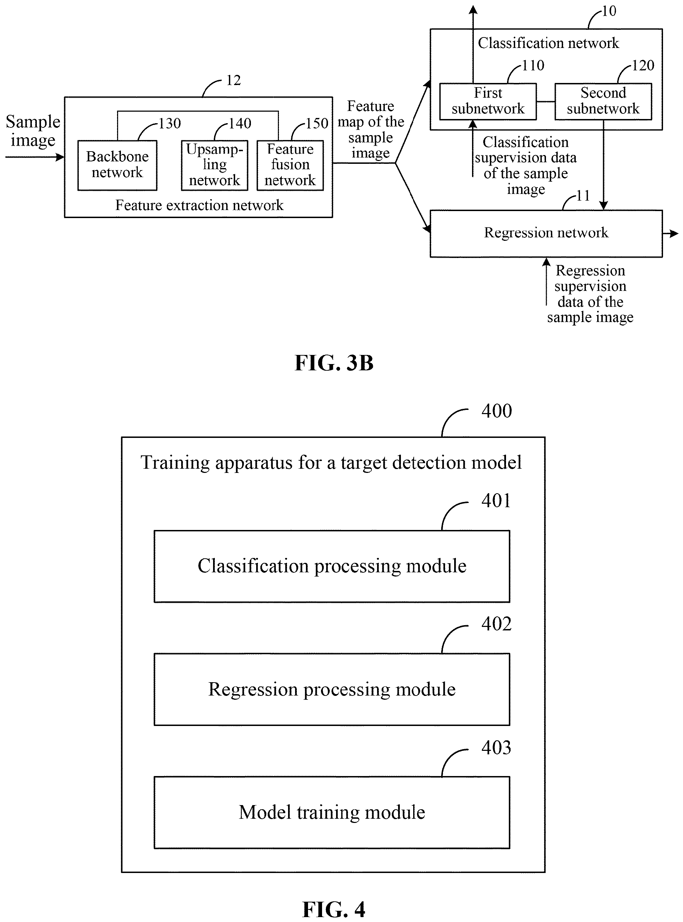

FIG. 3A is a flowchart of another training method for a target detection model according to an embodiment of the present disclosure, and FIG. 3B is a structural diagram of another initial model according to an embodiment of the present disclosure. In the embodiment, the structure of the constructed initial model is further optimized on the basis of the preceding embodiment. As shown in FIG. 3B, a feature extraction network 12 is added to the initial model. The feature extraction network 12 is used for extracting the feature map of the sample image, and is connected to the classification network 10 and the regression network 11 who are parallel, respectively. Optionally, as shown in FIG. 3A, the training method for a target detection model of the embodiment of the present disclosure executed according to the optimized initial model specifically includes steps described below.

In step S301, the feature map of the sample image is extracted through a feature extraction network of the initial model.

Optionally, the feature extraction network 12 in the embodiment may include a backbone network 130 an upsampling network 140. The so-called backbone network 130 is a main network used for feature extraction, which may include multiple convolutional layers, or may be implemented by using multiple network structures. Optionally, in the case where the target detection model of the embodiment is applied to a server, the backbone network 130 preferably adopts a relatively-high-accuracy residual network (ResNet). For example, distilled ResNet50-vd may be configured as the backbone network 130. Further, in the case where the target detection model of the embodiment is applied to a server, distilled MobileNetV3 may be configured as the backbone network 130.

Exemplarily, the backbone network 130 includes at least two cascaded feature extraction layers from bottom to top, and each feature extraction layer corresponds to extracting feature information of different layers. The input of the bottom layer of the backbone network 130 is the input of the initial model 1, that is, the sample image; the input of the last but one layer of the backbone network 130 from bottom to top is the output of the bottom layer; and so on, the output of the top layer of the backbone network 130 is the output of the backbone network 130, that is to say, the input of the upsampling network 140. In the embodiment of the present disclosure, the upsampling network 140 may further include multiple convolutional layers used for sampling the output result of the top layer of the backbone network 130. In order to improve the accuracy of extraction of the target, particularly, a relatively small target, in the embodiment, skip connection is introduced between the backbone network 130 and the upsampling network 140. For example, the output result of the bottom layer of the backbone network 130 and the output result of the upsampling network 140 may both be connected to the input of a feature fusion network 150. Optionally, in the embodiment, the feature extraction network 12 may further include a feature fusion network 150 for performing feature fusion and outputting the feature map. Further, the output of the feature fusion network 150 is the output of the feature extraction network 12, that is, the input of the classification network 10 and the input of the regression network 11.

Optionally, in the embodiment, the sample image may be input into the feature extraction network 12 of the initial model 1, and the backbone network 130, the upsampling network 140 and the feature fusion network 150 in the feature extraction network 12 cooperate to obtain the feature map of the sample image. Preferably, it may be that the sample image is input into the backbone network, and output results of the at least two feature extraction layers are obtained; the output result among the output results of the top layer among the at least two feature extraction layers is input into the upsampling network, and a sampling result is obtained; and the sampling result and the output result among the output results of the bottom layer among the at least two feature extraction layers are input into the feature fusion network, feature fusion is performed on the sampling result and the output result, and the feature map of the sample image is obtained.

Specifically, the sample image is configured as the input of the backbone network 130 and is input into the bottom layer of the backbone network 130, and each one or two feature extraction layers in the backbone network 130 perform feature extraction on the sample image. The output result of the top layer among the at least two feature extraction layers in the backbone network 130 is input into the upsampling network 140, the upsampling network 140 performs sampling processing on the output result, and the sampling result is obtained. Then, in order that the obtained feature map can better characterize the sample image, the sampling result and the output result of the bottom layer among the at least two feature extraction layers in the backbone network 130 may be input into the feature fusion network 150, the feature fusion network 150 performs feature fusion on the sampling result and the output result according to a preset fusion algorithm, and the feature map of the sample image is obtained. For example, the feature fusion network 150 may accumulate features at the same location in the output result of the bottom layer among the at least two feature extraction layers in the backbone network 130, and then the feature map of the sample image is obtained.

t should be noted that in order that the redundant information of features is reduced, the resolution of the feature map in the embodiment is less than the resolution of the sample image. For example, the resolution of the feature map is 1/4 of the resolution of the sample image.

Further, in order that the feature map can better express the sample image, the backbone network 130 and the upsampling network 140 have the same layer structure, feature extraction layers of the backbone network 130 one to one correspond to sampling layers of the upsampling network 140, and skip connection exists between corresponding layers.

In step S302, the feature map of the sample image is processed through the classification network of the initial model and a classification prediction result is obtained, a classification loss value is determined according to the classification prediction result and classification supervision data of the sample image, and a category probability of pixels in the feature map is determined according to a heat map of the feature map in the classification prediction result and a probability distribution map of the feature map is obtained.

In step S303, the feature map is processed through the regression network of the initial model and a regression prediction result is obtained, and a regression loss value is determined according to the probability distribution map, the regression prediction result and regression supervision data of the sample image.

Optionally, in the case where the target detection model of the embodiment is applied to a mobile terminal, in order that the prediction speed of the model is improved, the regression network and the classification network in the embodiment may both be composed of three convolutional layers. The sizes of kernels of these convolutional layers may be 1, 5 and 1, and the second convolutional layer is a deep convolutional layer. Further, without affecting the accuracy, the number of channels input into the classification network may be reduced from 128 to 48. In the case where the target detection model is applied to a server, the number of channels input into the classification network is 128.

In step S304, the initial model is trained according to the regression loss value and the classification loss value, and the target detection model is obtained.

Optionally, in the embodiment, the regression loss value and the classification loss value can be added to obtain a total loss value; then the initial model 1 is trained by using the total loss value, network parameters of the classification network 10, the regression network 11 and the feature extraction network 12 in the initial model 1 are consecutively optimized until the model converges, and thus the target detection model is obtained.

In the technical solution of the embodiment of the present disclosure, the feature extraction network for extracting the feature map of the sample image is introduced into the initial model, which greatly improves the accuracy of feature map extraction, and lays a foundation for obtaining an accurate target detection model. Meanwhile, the feature extraction network is added to the initial model and is trained with the classification network and the regression network as a whole, which reduces the complexity of model training and ensures the integrity of the model.

In an optional manner of the embodiment of the present disclosure, the sample image in the embodiment is obtained by performing data augmentation on an original image by adopting a data mixing algorithm and/or a deduplication algorithm. The data mixing algorithm is used for mixing data of different images to generate a new image. The data mixing algorithm may specifically be an algorithm such as MixUp or CutMix. Since the CutMix algorithm is an improved version of the MixUp algorithm, the embodiment preferably adopts the CutMix algorithm to perform data augmentation processing on the original image. For example, it may be that a part of the original image 1 is cut out, and the original image 1 is randomly filled with pixel values of other original images in a training set to generate a new image as the sample image for training the initial model.

Further, the deduplication algorithm is used for randomly discarding regions on the image to achieve data augmentation. For example, the deduplication algorithm may be the GridMask algorithm. In the embodiment, the deduplication algorithm may be adopted to randomly delete information from the original image to generate a new image as the sample image for training the initial model. Alternatively, the data mixing algorithm and the deduplication algorithm may be simultaneously adopted to perform data augmentation processing on the original image to obtain the sample image.

It should be noted that in the embodiment, the data mixing algorithm and/or the deduplication algorithm are adopted, which may improve the accuracy of the model without affecting the speed of the model. Specifically, it may be that the data mixing algorithm is adopted to enhance the generalization ability of the model, and the deduplication algorithm is adopted to avoid overfitting of the model.

Optionally, the trained target detection model in the embodiment of the present disclosure can be applied to a server or a mobile terminal. If FIG. 3B shows a trained target detection model and a user wants to know the location and category of a to-be-detected object in a target image, the target image including the to-be-detected object can be input into the target detection model, and a feature map of the target image is extracted through the feature extraction network 12 (including the backbone network 130, the upsampling network 140 and the feature fusion network 150) in the target detection model; the feature map is input into the classification network 10 and the regression network 11 respectively, classification processing is performed on the feature map of the target image through the first subnetwork 110 in the classification network 10, and a classification prediction result of the target image is obtained; meanwhile, regression processing is performed on the feature map of the target image through the regression network 11 in the target detection model, and a regression prediction result of the target image is obtained. It should be noted that in the embodiment of the present disclosure, when the target detection model is trained, the feature extraction network 12 (including the backbone network 130, the upsampling network 140 and the feature fusion network 150), the classification network 10 (including the first subnetwork 110 and the second subnetwork 120) and the regression network 11 are all need to be trained to consecutively optimize network parameters. However, in actual applications, only the feature extraction network, the regression network and the first subnetwork in the classification network are used, and it is not necessary to perform the process of obtaining the probability distribution map of the feature map.

FIG. 4 is a structural diagram of a training apparatus for a target detection model according to an embodiment of the present disclosure. The embodiment of the present disclosure is applicable to constructing a target detection model that can accurately find the location of a target in an image and determine the category of the target. The apparatus can implement the training method for a target detection model of any one of the embodiments of the present disclosure. As shown in FIG. 4, the training apparatus for a target detection model includes a classification processing module 401, a regression processing module 402 and a model training module 403.

The classification processing module 401 is configured to process, through a classification network of an initial model, a feature map of a sample image and obtain a heat map and a classification prediction result of the feature map, determine a classification loss value according to the classification prediction result and classification supervision data of the sample image, and determine, according to the heat map of the feature map, a category probability of pixels in the feature map and obtain a probability distribution map of the feature map.

The regression processing module 402 is configured to process, through a regression network of the initial model, the feature map and obtain a regression prediction result, and determine a regression loss value according to the probability distribution map, the regression prediction result and regression supervision data of the sample image.

The model training module 403 is configured to train the initial model according to the regression loss value and the classification loss value, and obtain the target detection model.

In the technical solution of the embodiment of the present disclosure, an initial model including a classification network and a regression network is constructed, a feature map of a sample image is input into the classification network and the regression network of the initial model respectively, classification supervision data is input into the classification network, regression supervision data is input into the regression network, and a classification loss value and a probability distribution map are obtained through the classification network according to the feature map and the classification supervision data of the sample image; meanwhile, a regression loss value is obtained through the regression network according to the feature map of the sample image, the regression supervision data and the probability distribution map; and then the initial model is trained by adopting the regression loss value and the classification loss value, and thus the target detection model is obtained. In the present disclosure, in the process of model training, the probability distribution map determined through the classification network is applied to the regression network, that is to say, the effect of the classification network is reflected in the regression network, so that the balance between the regression network and the classification network is achieved, and the accuracy of the target detection model is improved. In addition, various objects have different appearances, shapes and postures, and imaging will be interfered by factors such as illumination and occlusion; however, compared with related target detection models, in the embodiment, the calculation manner of the regression loss value is introduced, so that the accuracy of the target detection model is improved.

Exemplarily, the classification processing module 401 is specifically configured to perform steps described below.

The classification processing module 401 is configured to process the feature map through a first subnetwork in the classification network, and obtain the heat map of the feature map.

The classification processing module 401 is configured to perform, through a second subnetwork in the classification network, dimensionality reduction processing and activation processing on the heat map of the feature map, and obtain the category probability of the pixels in the feature map.

Exemplarily, the regression processing module 402 is specifically configured to perform steps described below.

The regression processing module 402 is configured to calculate intersection over union of the regression supervision data and the regression prediction result.

The regression processing module 402 is configured to determine the regression loss value according to the intersection over union and the probability distribution map.

Exemplarily, the above apparatus further includes a feature extraction module.

The feature extraction module is configured to extract the feature map of the sample image through a feature extraction network of the initial model.

Exemplarily, the feature extraction network includes a backbone network, an upsampling network and a feature fusion network, and the backbone network includes at least two feature extraction layers from bottom to top.

Correspondingly, the feature extraction module is specifically configured to perform steps described below.

The feature extraction module is configured to input the sample image into the backbone network, and obtain output results of the at least two feature extraction layers.

The feature extraction module is configured to input an output result among the output results of a top layer among the at least two feature extraction layers into the upsampling network, and obtain a sampling result.

The feature extraction module is configured to input the sampling result and an output result among the output results of a bottom layer among the at least two feature extraction layers into the feature fusion network, perform feature fusion on the sampling result and the output result, and obtain the feature map of the sample image.

Exemplarily, the above apparatus further includes a data augmentation module.

The data augmentation module is configured to perform data augmentation on an original image by adopting a data mixing algorithm and/or a deduplication algorithm, and obtain the sample image.

Exemplarily, the above apparatus further includes a model using module.

The model using module is configured to input a feature map of a target image into the target detection model, and obtain a classification prediction result and a regression prediction result of the target image.

According to the embodiments of the present disclosure, the present disclosure further provides an electronic device, a readable storage medium and a computer program product.

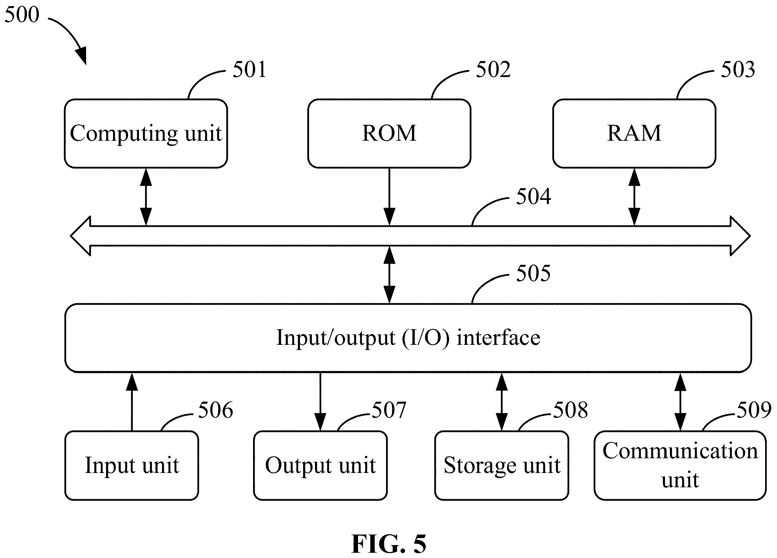

FIG. 5 is a block diagram of an example electronic device 500 for implementing the embodiments of the present disclosure. Electronic devices are intended to represent various forms of digital computers, for example, laptop computers, desktop computers, worktables, personal digital assistants, servers, blade servers, mainframe computers and other applicable computers. Electronic devices may also represent various forms of mobile apparatuses, for example, personal digital assistants, cellphones, smartphones, wearable devices and other similar computing apparatuses. Herein the shown components, the connections and relationships between these components, and the functions of these components are illustrative only and are not intended to limit the implementation of the present disclosure as described and/or claimed herein.

As shown in FIG. 5, the device 500 includes a computing unit 501. The computing unit 501 may perform various appropriate actions and processing according to a computer program stored in a read-only memory (ROM) 502 or a computer program loaded into a random-access memory (RAM) 503 from a storage unit 508. Various programs and data required for the operation of the electronic device 500 are also stored in the RAM 503. The computing unit 501, the ROM 502 and the RAM 503 are connected to each other by a bus 504. An input/output (I/O) interface 505 is also connected to the bus 504.

Multiple components in the electronic device 500 are connected to the I/O interface 505. The multiple components include an input unit 506 such as a keyboard and a mouse, an output unit 507 such as various types of displays and speakers, the storage unit 508 such as a magnetic disk and an optical disk, and a communication unit 509 such as a network card, a modem and a wireless communication transceiver. The communication unit 509 allows the device 500 to exchange information/data with other devices over a computer network such as the Internet and/or various telecommunications networks.

The computing unit 501 may be a general-purpose and/or special-purpose processing component having processing and computing capabilities. Examples of the computing unit 501 include, but are not limited to, a central processing unit (CPU), a graphics processing unit (GPU), a special-purpose artificial intelligence (AI) computing chip, a computing unit executing machine learning model algorithms, a digital signal processor (DSP), and any appropriate processor, controller and microcontroller. The computing unit 501 executes various methods and processing described above, such as the training method for a target detection model. For example, in some embodiments, the training method for a target detection model may be implemented as a computer software program tangibly contained in a machine-readable medium such as the storage unit 508. In some embodiments, part or all of computer programs may be loaded and/or installed on the electronic device 500 via the ROM 502 and/or the communication unit 509. When the computer programs are loaded into the RAM 503 and executed by the computing unit 501, one or more steps of the above training method for a target detection model may be performed. Alternatively, in other embodiments, the computing unit 501 may be configured, in any other suitable manner (for example, by means of firmware), to execute the training method for a target detection model.

Herein various embodiments of the systems and techniques described above may be implemented in digital electronic circuitry, integrated circuitry, field-programmable gate arrays (FPGAs), application-specific integrated circuits (ASICs), application-specific standard products (ASSPs), systems on chips (SoCs), complex programmable logic devices (CPLDs), and computer hardware, firmware, software and/or combinations thereof. The various embodiments may include implementations in one or more computer programs. The one or more computer programs are executable and/or interpretable on a programmable system including at least one programmable processor. The programmable processor may be a special-purpose or general-purpose programmable processor for receiving data and instructions from a memory system, at least one input apparatus and at least one output apparatus and transmitting data and instructions to the memory system, the at least one input apparatus and the at least one output apparatus.

Program codes for implementation of the method of the present disclosure may be written in any combination of one or more programming languages. These program codes may be provided for the processor or controller of a general-purpose computer, a special-purpose computer or another programmable data processing apparatus to enable functions/operations specified in a flowchart and/or a block diagram to be implemented when the program codes are executed by the processor or controller. The program codes may all be executed on a machine; may be partially executed on a machine; may serve as a separate software package that is partially executed on a machine and partially executed on a remote machine; or may all be executed on a remote machine or a server.

In the context of the present disclosure, the machine-readable medium may be a tangible medium that contains or stores a program available for an instruction execution system, apparatus or device or a program used in conjunction with an instruction execution system, apparatus or device. The machine-readable medium may be a machine-readable signal medium or a machine-readable storage medium. The machine-readable medium may include, but is not limited to, an electronic, magnetic, optical, electromagnetic, infrared or semiconductor system, apparatus or device, or any appropriate combination thereof. Concrete examples of the machine-readable storage medium may include an electrical connection based on one or more wires, a portable computer disk, a hard disk, a random-access memory (RAM), a read-only memory (ROM), an erasable programmable read-only memory (EPROM) or a flash memory, an optical fiber, a portable compact disc read-only memory (CD-ROM), an optical storage device, a magnetic storage device, or any appropriate combination thereof.

In order that interaction with a user is provided, the systems and techniques described herein may be implemented on a computer. The computer has a display apparatus (for example, a cathode-ray tube (CRT) or liquid-crystal display (LCD) monitor) for displaying information to the user; and a keyboard and a pointing apparatus (for example, a mouse or a trackball) through which the user can provide input to the computer. Other types of apparatuses may also be used for providing interaction with a user. For example, feedback provided for the user may be sensory feedback in any form (for example, visual feedback, auditory feedback or haptic feedback). Moreover, input from the user may be received in any form (including acoustic input, voice input or haptic input).

The systems and techniques described herein may be implemented in a computing system including a back-end component (for example, a data server), a computing system including a middleware component (for example, an application server), a computing system including a front-end component (for example, a client computer having a graphical user interface or a web browser through which a user can interact with implementations of the systems and techniques described herein) or a computing system including any combination of such back-end, middleware or front-end components. The components of the system may be interconnected by any form or medium of digital data communication (for example, a communication network). Examples of the communication network include a local area network (LAN), a wide area network (WAN), a blockchain network and the Internet.

The computing system may include clients and servers. A client and a server are generally remote from each other and typically interact through a communication network. The relationship between the client and the server arises by virtue of computer programs running on the respective computers and having a client-server relationship to each other. The server may be a cloud server, also referred to as a cloud computing server or a cloud host. As a host product in a cloud computing service system, the server solves the defects of difficult management and weak service scalability in a related physical host and a related virtual private server (VPS) service.

It is to be understood that various forms of the preceding flows may be used, with steps reordered, added or removed. For example, the steps described in the present disclosure may be executed in parallel, in sequence or in a different order as long as the desired result of the technical solution disclosed in the present disclosure is achieved. The execution sequence of these steps is not limited herein.

The scope of the present disclosure is not limited to the preceding embodiments. It is to be understood by those skilled in the art that various modifications, combinations, subcombinations and substitutions may be made depending on design requirements and other factors. Any modifications, equivalent substitutions, improvements and the like made within the spirit and principle of the present disclosure are within the scope of the present disclosure.

## Claims

1. A training method for a target detection model, comprising:
processing (S101), through a classification network of an initial model, a feature map of a sample image and obtaining a heat map and a classification prediction result of the feature map, determining a classification loss value according to the classification prediction result and classification supervision data of the sample image, and determining, according to the heat map of the feature map, a category probability of pixels in the feature map and obtaining a probability distribution map of the feature map;
processing (S102), through a regression network of the initial model, the feature map and obtaining a regression prediction result, and determining a regression loss value according to the probability distribution map, the regression prediction result and regression supervision data of the sample image; and
training (S 103) the initial model according to the regression loss value and the classification loss value, and obtaining the target detection model.

2. The method according to claim 1, wherein processing, through the classification network of the initial model, the feature map and obtaining the heat map of the feature map, and determining, according to the heat map of the feature map, the category probability of pixels in the feature map comprises:
processing the feature map through a first subnetwork in the classification network, and obtaining the heat map of the feature map; and
performing, through a second subnetwork in the classification network, dimensionality reduction processing and activation processing on the heat map of the feature map, and obtaining the category probability of the pixels in the feature map.

3. The method according to claim 1, wherein the determining the regression loss value according to the probability distribution map, the regression prediction result and the regression supervision data of the sample image comprises:
calculating intersection over union of the regression supervision data and the regression prediction result; and
determining the regression loss value according to the intersection over union and the probability distribution map.

4. The method according to claim 1, further comprising:
extracting the feature map of the sample image through a feature extraction network of the initial model.

5. The method according to claim 4, wherein the feature extraction network comprises a backbone network, an upsampling network and a feature fusion network, and wherein the backbone network comprises at least two feature extraction layers from bottom to top; and
wherein the extracting the feature map of the sample image through the feature extraction network of the initial model comprises:
inputting the sample image into the backbone network, and obtaining output results of the at least two feature extraction layers;
inputting an output result among the output results of a top layer among the at least two feature extraction layers into the upsampling network, and obtaining a sampling result; and
inputting the sampling result and an output result among the output results of a bottom layer among the at least two feature extraction layers into the feature fusion network, performing feature fusion on the sampling result and the output result, and obtaining the feature map of the sample image.

6. The method according to claim 4, further comprising:
performing data augmentation on an original image by adopting a data mixing algorithm and/or a deduplication algorithm, and obtaining the sample image.

7. The method according to claim 1, further comprising:
inputting a feature map of a target image into the target detection model, and obtaining a classification prediction result and a regression prediction result of the target image.

8. A training apparatus for a target detection model, comprising:
a classification processing module (401), which is configured to process, through a classification network of an initial model, a feature map of a sample image and obtain a heat map and a classification prediction result of the feature map, determine a classification loss value according to the classification prediction result and classification supervision data of the sample image, and determine, according to the heat map of the feature map, a category probability of pixels in the feature map and obtain a probability distribution map of the feature map;
a regression processing module (402), which is configured to process, through a regression network of the initial model, the feature map and obtain a regression prediction result, and determine a regression loss value according to the probability distribution map, the regression prediction result and regression supervision data of the sample image; and
a model training module (403), which is configured to train the initial model according to the regression loss value and the classification loss value, and obtain the target detection model.

9. The apparatus according to claim 8, wherein the classification processing module (401) is configured to:
process the feature map through a first subnetwork in the classification network, and obtain the heat map of the feature map; and
perform, through a second subnetwork in the classification network, dimensionality reduction processing and activation processing on the heat map of the feature map, and obtain the category probability of the pixels in the feature map.

10. The apparatus according to claim 8, wherein the regression processing module (402) is configured to:
calculate intersection over union of the regression supervision data and the regression prediction result; and
determine the regression loss value according to the intersection over union and the probability distribution map.

11. The apparatus according to claim 8, further comprising:
a feature extraction module, which is configured to extract the feature map of the sample image through a feature extraction network of the initial model.

12. The apparatus according to claim 11, wherein the feature extraction network comprises a backbone network, an upsampling network and a feature fusion network, and wherein the backbone network comprises at least two feature extraction layers from bottom to top; and wherein the feature extraction module is configured to:
input the sample image into the backbone network, and obtain output results of the at least two feature extraction layers;
input an output result among the output results of a top layer among the at least two feature extraction layers into the upsampling network, and obtain a sampling result; and
input the sampling result and an output result among the output results of a bottom layer among the at least two feature extraction layers into the feature fusion network, perform feature fusion on the sampling result and the output result, and obtain the feature map of the sample image.

13. An electronic device, comprising:
at least one processor; and
a memory communicatively connected to the at least one processor; wherein
the memory stores instructions executable by the at least one processor, and the instructions are executed by the at least one processor to cause the at least one processor to execute the training method for a target detection model of any one of claims 1 to 7.

14. A non-transitory computer-readable storage medium storing computer instructions for causing a computer to execute the training method for a target detection model of any one of claims 1 to 7.

15. A computer program product, comprising a computer program which, when executed by a processor, implements the training method for a target detection module of any one of claims 1 to 7.
